# EUROPÄISCHE PATENTSCHRIFT

(11) **EP 2 208 939 B1**
(45) Veröffentlichungstag und Bekanntmachung des Hinweises auf die Patenterteilung: **22.04.2015**
(21) Anmeldenummer: 10000329.2
(22) Anmeldetag: 15.01.2010
(51) Int. Cl.: F24D 11/00, F24H 9/12, F24D 19/10, F24D 19/00

(54) **Solarthermische Anlage**
Solar thermal device
Installation solaire thermique

(30) Priorität: 16.01.2009 DE 102009005332
(43) Veröffentlichungstag der Anmeldung: 21.07.2010
(73) Patentinhaber: Viessmann Werke GmbH & Co. KG, 35107 Allendorf (DE)
(72) Erfinder: Eisenmann, Wolfgang, 35041 Marburg (DE); Freitag, Richard, 35066 Haubern (DE); Wenzler, Sigurd, 35066 Frankenberg (DE)
(74) Vertreter: Wolf, Michael

(56) Entgegenhaltungen:
- EP-A1- 1 666 811
- DE-A1- 2 839 258
- DE-A1-102006 009 112
- DE-U1-202008 007 256

## Beschreibung

Die Erfindung betrifft eine solarthermische Anlage gemäß dem Oberbegriff des Patentanspruchs 1.

Eine solarthermische Anlage der eingangs genannten Art ist nach der DE 20 2008 007 256 U1 bekannt. Diese besteht aus einem Solarkreislauf, der hydraulisch mit einem Kühlkörper verbunden ist, wobei am Kühlkörper als Berührungsschutz ein Abdeckelement vorgesehen ist. Bezüglich der genauen, im übrigen, an sich bekannten Funktion dieser Anlage wird der Einfachheit halber auf die genannte Schrift verwiesen.

Gemäß Absatz [0015] dieser Schrift ist weiterhin Folgendes bekannt: "Bevorzugt kann vorgesehen sein, dass der Kühlkörper und die Solarstation ein und dasselbe Gehäuse aufweisen. Auf diese Weise wird durch die Solarstation und deren Gehäuse bevorzugt eine Abdeckung des Kühlkörpers erreicht. Damit ist der Kühlkörper gegen ein Berühren durch Personen geschützt, vorteilhaft tritt ein Schutz für diese Personen gegen Verbrennung durch Anfassen am Kühlkörper ein".

Die bei Integration des Kühlkörpers in die Solarstation erreichbare Kühlleistung (Wärmeabgabe) ist, wie Versuche gezeigt haben, in der Praxis zu gering. Der Erfindung liegt daher die Aufgabe zugrunde, eine Solarthermische Anlage der eingangs genannten Art zu verbessern.

Diese Aufgabe ist mit einer solarthermischen Anlage der eingangs genannten Art durch die im Kennzeichen des Patentanspruchs 1 aufgeführten Merkmale gelöst.

Nach der Erfindung ist also als Kühlkörper ein Heizkörper vorgesehen.

Unter "Heizkörper" ist dabei ein handelsüblicher Heizkörper (Univeralheizkörper) zu verstehen, wie er bei normalen Heizungsanlagen Verwendung findet. Die vorteilhafte Besonderheit besteht erfindungsgemäß darin, dass solche Heizkörper typischerweise mindestens 1 Kilowatt an Wärme abgeben können, verbunden mit dem Vorteil, dass sie als Massenware zu günstigen Preisen zur Verfügung stehen. Außerdem kann auf eine aufwändige Montagekonstruktion des Kühlkörpers (wie zum Beispiel im Gehäuse der Solarstation) verzichtet werden, da der Heizkörper einfach, wie üblich, an einer Gebäudewand befestigt wird, und zwar, zum Beispiel in dem Kellerraum, in dem auch die Solarstation der Solaranlage angeordnet ist.

Dank des erfindungsgemäßen Heizkörpers sind die Solarkreiskomponenten vor Übertemperaturen im Stagnationsfall durch gezielte, lokale Kondensation von Wärmeträgerdampf im Heizkörper geschützt. Dies führt zu einer erhöhten Lebensdauer und Betriebssicherheit der solarthermischen Anlage, da der wärmeträgerdampf, wie in der DE 20 2008 007 256 U1 beschrieben, keine temperaturgefährdeten Baugruppen erreichen kann bzw. nicht abgeblasen werden muss.

Darüber hinaus ist durch das Abdeckelement ein integrierter Berührschutz vorgesehen, wobei eine besonders bevorzugte Ausführungsform dieses Berührschutzes weiter unten noch genauer erläutert wird.

Andere vorteilhafte Weiterbildungen ergeben sich aus den abhängigen Patentansprüchen.

Die erfindungsgemäße solarthermische Anlage einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

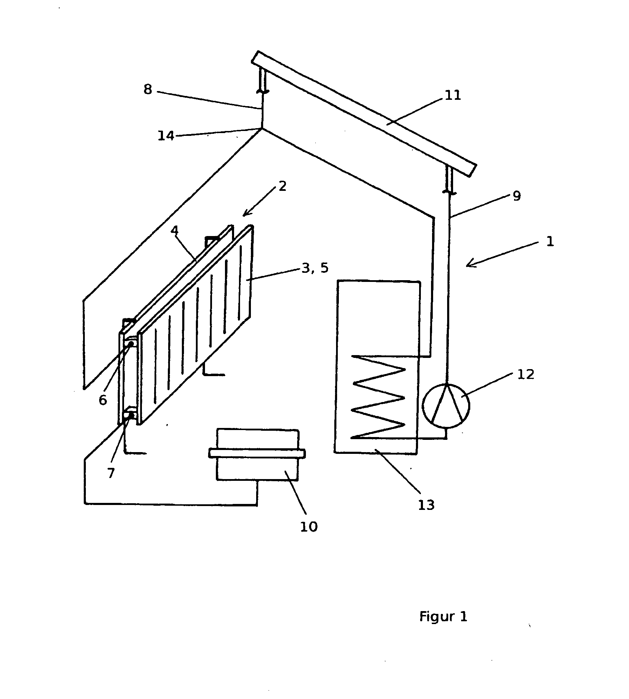

Es zeigt schematisch
- Figur 1: die erfindungsgemäße solarthermische Anlage mit einem als Heizkörper ausgebildeten Kühlkörper.

Die in der einzigen Figur 1 dargestellte solarthermische Anlage besteht aus einem Solarkreislauf 1 mit Vorlauf- oder Rücklaufstrang 8, 9, einem Solarkollektor 11, einer Pumpe 12 zum Fördern eines Solarkreislaufmediums, einem Speicherbehälter 13 zur Aufnahme der vom Solarkollektor 11 aufgenommenen Solarwärme, einem noch genauer zu erläuternden, hydraulisch mit dem Solarkreislauf 1 verbunden Kühlkörper 2 und einem so genannten Membranausdehnungsgefäß 10 zum Ausgleich von Druckschwankungen im Solarkreislauf 1.

Beim dargestellten Ausführungsbeispiel ist am Vorlaufstrang 8 des Solarkreislaufs 1 ein Abzweig 14 vorgesehen, der zu einem Zufuhranschluss 6 des bereits genannten Kühlkörpers 2 und von dort über einen Abfuhranschluss 7 des Kühlkörpers 2 zum Membranausdehnungsgefäß 10 führt. Alternativ, aber nicht dargestellt, kann der Abzweig auch am Rücklaufstrang 9 angeordnet sein.

Sollte es aufgrund einer Stagnation zu Übertemperaturen im Solarkreislauf 1 kommen, wandern entsprechende Dämpfe bzw. Dampfblasen des Solarkreislaufmediums in bekannter Weise aufgrund der Drucknachgiebigkeit des Membranausdehnungsgefäßes 10 in den Kühlkörper 2 und können dort kondensieren.

Wesentlich für die Erfindung ist dabei nun, dass als Kühlkörper 2 ein handelsüblicher Heizkörper vorgesehen ist. Wie eingangs erläutert, hat der Einsatz eines solchen, eine große Wärmemenge abgeben könnenden Heizkörpers vorteilhaft zur Folge, dass der Solarkreislauf 1 eigensicher ausgeführt ist. Darüber hinaus ist ein klassischer Heizkörper ein Massenprodukt, d. h. die erfindungsgemäße Lösung ist nicht nur thermisch vorteilhaft, sondern auch kostengünstig.

Ein weiterer wichtiger Aspekt der Erfindung besteht darin, dass am Kühlkörper 2 als Berührungsschutz ein Abdeckelement 3 vorgesehen ist. Sollte der Heizkörper aus einer einzigen Heizfläche bestehen (nicht dargestellt), käme als Abdeckelement 3 zum Beispiel ein entsprechendes Abdeckgitter in Betracht, dass gewährleistet, dass sich niemand an dem Kühlkörper 2 verbrennen kann (bei Stagnationen entstehen typischerweise Temperaturen von rund 140°C im Solarkreislauf).

Eine solche Ausgestaltung fällt jedoch nicht unter den Schutzbereich der Patentansprüche.

Mit Verweis auf Figur 1 ist vorgesehen, dass der Heizkörper, der typischerweise an einer Gebäudewand befestigt wird, aus mindestens zwei parallel zueinander angeordneten Heizflächen 4, 5 besteht, In diesem Fall wird nämlich die gebäudewandferne Heizfläche 5, also die, bei der die Gefahr einer Berührung besteht, zur Ausbildung des Abdeckelements 3 genutzt. Dazu ist, um weiterhin möglichst einfach einen Universalheizkörper nutzen zu können, erfindungsgemäß vorgesehen, dass bei Fertigung des Heizkörpers an der gebäudewandfernen Heizfläche 5 vorgesehene Zu- und Abströmöffnungen beim Betrieb des Heizkörpers im Solarkreislauf 1 verschlossen ausgebildet sind.

Zur weiteren Verbesserung der Sicherheit des Solarkreislaufs 1 ist schließlich noch vorgesehen, dass der Zu- und Abfuhranschluss 6, 7 des Heizkörpers temperatur- und kältemittelbeständig, insbesondere glykolbeständig, ausgebildet ist, denn im Unterschied zum Einsatz in einem "normalen" Heizkreislauf können im Solarkreislauf 1 erstens höhere Temperaturen auftreten und zweitens erfordert das Solarkreislaufmedium eine speziell angepasste Materialauswahl (insbesondere für die verwendeten Dichtungen).

### Bezugszeichenliste

- 1: Solarkreislauf
- 2: Kühlkörper
- 3: Abdeckelement
- 4: Heizfläche
- 5: Heizfläche
- 6: Zufuhranschluss
- 7: Abfuhranschluss
- 8: Vorlaufstrang
- 9: Rücklaufstrang
- 10: Membranausdehnungsgefäß
- 11: Solarkollektor
- 12: Pumpe
- 13: Speicherbehälter
- 14: Abzweig

## Patentansprüche

1. Solarthermische Anlage, umfassend einen Solarkreislauf (1), der hydraulisch mit einem Kühlkörper (2) verbunden ist, wobei am Kühlkörper (2) als Berührungsschutz ein Abdeckelement (3) vorgesehen ist, wobei
als Kühlkörper (2) ein Heizkörper vorgesehen ist, **dadurch gekennzeichnet,**
**dass** der an einer Gebäudewand anzuordnende Heizkörper aus mindestens zwei parallel zueinander angeordneten Heizflächen (4, 5) besteht, wobei die gebäudewandferne Heizfläche (5) das Abdeckelement (3) bildet.

2. Solarthermische Anlage nach Anspruch 1,
**dadurch gekennzeichnet,**
**dass** an der gebäudewandfernen Heizfläche (5) vorgesehene Zu- und Abströmöffnungen beim Betrieb des Heizkörpers im Solarkreislauf (1) verschlossen ausgebildet sind.

3. Solarthermische Anlage nach einem der Ansprüche 1 bis 2,
**dadurch gekennzeichnet,**
**dass** der Heizkörper einen Zu- und einen Abfuhranschluss (6, 7) aufweist.

4. Solarthermische Anlage nach Anspruch 3,
**dadurch gekennzeichnet,**
**dass** der Zufuhranschluss (6) wahlweise mit einem Vorlauf- oder Rücklaufstrang (8, 9) des Solarkreislaufs (1) verbunden ist.

5. Solarthermische Anlage nach Anspruch 3 oder 4,
**dadurch gekennzeichnet,**
**dass** der Abfuhranschluss (7) mit einem Membranausdehnungsgefäß (10) verbunden ist.

6. Solarthermische Anlage nach einem der Ansprüche 3 bis 5,
**dadurch gekennzeichnet,**
**dass** der Zu- und Abfuhranschluss (6, 7) temperatur- und kältemittelbeständig, insbesondere glykolbeständig, ausgebildet ist.

## Claims

1. A solar-thermal plant, comprising a solar circuit (1), which is hydraulically connected to a heat sink (2), wherein a cover element (3) is provided on the heat sink (2) as a touch guard, wherein
a radiator is provided as heat sink (2),
**characterised**
**in that** the radiator to be arranged on a building wall consists of at least two heating surfaces (4, 5) that are arranged parallel to one another, wherein the heating surface (5) remote from the building wall forms the cover element (3).

2. The solar thermal plant according to Claim 1,
**characterised**
**in that** supply and drain openings provided on the heating surface (5) remote from the building wall are constructed to be sealed during operation of the radiator in the solar circuit (1).

3. The solar-thermal plant according to one of Claims 1 to 2,
**characterised**
**in that** the radiator has a supply and a drain connection (6, 7).

4. The solar thermal plant according to Claim 3,
**characterised**
**in that** the supply connection (6) is optionally connected to a flow or return line (8, 9) of the solar circuit (1).

5. The solar-thermal plant according to Claim 3 or 4,
**characterised**
**in that** the drain connection (7) is connected to a membrane expansion tank (10).

6. The solar-thermal plant according to one of Claims 3 to 5,
**characterised**
**in that** the supply and drain connection (6, 7) is constructed in a temperature- and coolant-resistant, particularly glycol-resistant, manner.

## Revendications

1. Installation solaire thermique, comprenant un circuit solaire (1) relié de manière hydraulique à un corps de refroidissement (2), un élément de couverture (3) étant prévu en guise de protection contre le contact sur le corps de refroidissement (2),
un corps de chauffe étant prévu en tant que corps de refroidissement,
**caractérisée en ce que**
le corps de chauffe à mettre en place sur un mur de bâtiment se compose au moins de deux surfaces chauffantes (4, 5) disposées parallèlement l'une par rapport à l'autre, la surface chauffante (5) éloignée du mur du bâtiment formant l'élément de couverture (3).

2. Installation solaire thermique selon la revendication 1,
**caractérisée en ce que**
des ouvertures d'admission et d'évacuation prévues sur la surface chauffante (5) éloignée du mur du bâtiment sont réalisées de manière fermée lors du fonctionnement du corps de chauffe dans le circuit solaire (1).

3. Installation solaire thermique selon l'une des revendications 1 à 2,
**caractérisée en ce que**
le corps de chauffe présente un raccord d'alimentation et d'évacuation (6, 7).

4. Installation solaire thermique selon la revendication 3,
**caractérisée en ce que**
le raccord d'alimentation (6) est relié au choix à une voie aller ou retour (8, 9) du circuit solaire (1).

5. Installation solaire thermique selon la revendication 3 ou 4,
**caractérisée en ce que**
le raccord d'évacuation (7) est relié à un vase d'expansion à membrane (10).

6. Installation solaire thermique selon l'une des revendications 3 à 5,
**caractérisée en ce que**
le raccord d'alimentation et d'évacuation (6, 7) est réalisé de manière à résister à la température et aux réfrigérants, en particulier de manière à résister aux glycols.
